# FASCICULE DE BREVET EUROPEEN

(11) **EP 0 700 871 B1**
(45) Date de publication et mention de la délivrance du brevet: **12.01.2000**
(21) Numéro de dépôt: 95402043.4
(22) Date de dépôt: 11.09.1995
(51) Int. Cl.: C01F 17/00, B01J 13/00

(54) **Dispersion colloidale d'un composé de cérium à concentration élevée et son procédé de préparation**
Kolloidale Dispersion einer Ceriumverbindung mit hoher Konzentration und Herstellungsverfahren dafür
Colloidal dispersion of a cerium compound with high concentration and process for the preparation thereof

(30) Priorité: 12.09.1994 FR 9410855
(43) Date de publication de la demande: 13.03.1996
(73) Titulaire: RHODIA CHIMIE, 92408 Courbevoie Cédex (FR)
(72) Inventeur: Chane-Ching, Jean-Yves, F-95600 Eaubonne (FR); Chopin, Thierry, F-95320 Saint-Leu-La-Foret (FR)
(74) Mandataire: Dubruc, Philippe

(56) Documents cités:
- EP-A- 0 186 313
- EP-A- 0 206 906
- EP-A- 0 239 479
- EP-A- 0 316 205
- EP-A- 0 335 538
- FR-A- 2 652 805

## Description

La présente invention concerne une dispersion colloïdale d'un composé de cérium à concentration élevée, et à grande pureté.

Les dispersions de composés de cérium sont utilisées dans de nombreuses applications. On peut citer notamment l'utilisation en catalyse hétérogène et, en particulier en catalyse du traitement des gaz d'échappements des moteurs à explosion interne (catalyse pour post combustion automobile). Ces dispersions peuvent aussi être utilisées comme agent de revêtement anticorrosion ou en cosmétique.

De nombreux procédés de préparation de telles dispersions ont été décrits. Toutefois, de nombreux procédés connus ne permettent pas d'obtenir des dispersions présentant une concentration très élevée en composé de cérium. Or, dans le cadre des applications qui ont été citées plus haut où les dispersions sont utilisées pour imprégner un support avec du cérium, il est intéressant de pouvoir disposer de dispersions à fortes concentrations. Le document EP-A-0 239 479 décrit l'obtention de dispersions aqueuses colloïdales de composé de ce IV à forte concentration en cérium IV pouvant atteindre 700 g/l. Il est cependant nécessaire dans des applications comme la catalyse ou la cosmétique d'utiliser des dispersions qui soient pures, c'est à dire qui contiennent le moins possible d'ions autres que le cérium.

L'objet de l'invention est donc de proposer des dispersions colloïdales à concentration élevée et, à grande pureté.

Selon l'invention la dispersion colloïdale en phase liquide aqueuse d'un composé de cérium à base d'oxyde ou hydroxide de cérium est caractérisée en ce qu'elle présente une concentration en CeO₂ d'au moins 800g/l et une conductivité qui est d'au plus 35mS/cm.

L'invention concerne aussi un procédé de préparation de telles dispersions qui est caractérisé en ce qu'on fait subir à une suspension ou dispersion de départ un traitement par dialyse ou un traitement par une résine cationique et une résine anionique, puis ou concentre la dispersion obtenue.

D'autres caractéristiques, détails et avantages de l'invention apparaîtront encore plus complètement à la lecture de la description qui va suivre, ainsi que des divers exemples concrets mais non limitatifs destinés à l'illustrer.

Pour la suite de la description, l'expression dispersion colloïdale d'un composé de cérium désigne tout système constitué de fines particules solides de dimensions colloïdales à base d'oxyde et/ou d'oxyde hydraté (hydroxyde) de cérium en suspension dans une phase liquide aqueuse, lesdites espèces pouvant en outre, éventuellement, contenir des quantités résiduelles d'ions liés ou adsorbés tels que par exemple des nitrates, des acétates, des citrates ou des ammoniums. On notera que dans de telles dispersions, le cérium peut se trouver soit totalement sous la forme de colloïdes, soit simultanément sous la forme d'ions et sous la forme de colloïdes.

En outre, on indique ici que le diamètre moyen des colloïdes doit être entendu comme désignant le diamètre hydrodynamique moyen de ces derniers, et tel que déterminé par diffusion quasi-élastique de la lumière selon la méthode décrite par Michael L. Mc CONNELL dans la revue Analytical Chemistry 53, n° 8,1007 A, (1981).

Par ailleurs, le terme de pureté s'applique ici en référence aux impuretés sous forme d'espèces ioniques présentes dans la dispersion. Cette pureté peut s'exprimer en mesurant la conductivité de la dispersion.

Enfin, le composé de cérium est généralement un composé de cérium IV.

Selon l'invention la dispersion colloïdale se caractérise par une concentration importante et une grande pureté.

Cette pureté se traduit par une conductivité de la dispersion qui est d'au plus 35mS/cm. Cette conductivité varie en fonction du pH de la dispersion colloïdale. Elle est en principe d'autant plus faible que le pH est élevé.

Le pH de la dispersion colloïdale est généralement compris entre 0,5 et 2 et plus particulièrement entre 0,95 et 2. En fonction de ces valeurs de pH, la conductivité peut être plus particulièrement comprise entre 5 et 35mS/cm.

Le diamètre moyen des colloïdes de la dispersion peut varier entre 3 et 100nm et plus particulièrement entre 5 et 50nm. Une caractéristique préférentielle de la dispersion colloïdale de l'invention est que les colloïdes présentent une répartition monodisperse en taille.

Selon l'invention la dispersion colloïdale se caractérise aussi par une concentration très élevée. Cette concentration, exprimée en CeO₂ est supérieure à 800g/l.

Cette concentration peut même être d'au moins 1000g/l et dépasser 1200g/l.

Enfin, dans le cas de dispersions qui ont été obtenues par des procédés utilisant du nitrate de cérium comme produit de départ, le rapport molaire NO₃/Ce est inférieur à 0,7 et peut être plus particulièrement compris entre 0,2 et 0,5.

Le procédé de préparation des dispersions colloïdales de l'invention va maintenant être décrit.

Le procédé de l'invention comporte comme caractéristique essentielle un traitement par dialyse ou par résine d'une suspension ou dispersion de CeO₂ de départ.

La suspension ou la dispersion colloïdale de départ pourra avoir été obtenue par tout moyen connu. On pourra se référer notamment aux procédés décrits dans les demandes de brevets européens EP-A-206906, EP-A-208581, EP-A-316205. On peut utiliser tout particulièrement les dispersions colloïdales obtenues par thermohydrolyse d'une solution aqueuse d'un sel de cérium IV comme un nitrate, en milieu acide notamment.

Un tel procédé est décrit dans la demande de brevet européen EP-A-239477 ou EP-A-208580.

Dans le cas d'un traitement par dialyse, on utilise une membrane de dialyse résistante au pH de la dispersion ou de la suspension et présentant un diamètre de coupure qui soit imperméable aux colloïdes. Ce peut être par exemple une membrane cellulosique à paroi mince et de diamètre de coupure de poids moléculaire correspondant à une valeur comprise entre 12000 à 14000 dalton.

En ce qui concerne le traitement par résine on utilise de préférence des résines cationiques fortement acides et anioniques fortement basiques.

Selon un mode de réalisation préféré, le traitement se fait d'abord par une résine cationique puis dans un deuxième temps on fait agir la résine anionique.

On conduit le traitement par résine jusqu'à l'obtention du pH désiré de la dispersion, généralement un pH d'au plus 2.

Le traitement par résine se fait de tout manière appropriée. Les résines peuvent être mises en contact direct avec la dispersion colloïdale. Une méthode préférée consiste à mettre les résines dans des sacs de membrane de dialyse, par exemple en matière cellulosique et ces sacs sont introduits dans la dispersion à traiter.

Les résines échangeuses d'ions cationiques et anioniques sont des produits bien connus. A titre d'exemple, on pourra mentionner pour les résines cationiques celles à squelette polystyrénique. On pourra utiliser plus particulièrement celles présentant des groupes fonctionnels sulfonates, H⁺. Des exemples de résines cationiques utilisables sont les résines Amberlite IR 120® ou Amberlite IRN 77®.

A titre d'exemple, on pourra indiquer pour les résines anioniques celles à squelette de copolymères styrène-divinylbenzène. On pourra utiliser plus particulièrement celles présentant des groupes fonctionnels ammonium quaternaire, OH⁻. Des exemples de résines anioniques utilisables sont les résines Amberlite IRN 78® ou Duolite A 101®.

On utilise généralement les résines dans des quantités qui peuvent varier entre 25 et 150g de résine sèche par litre de dispersion colloïdale pour une concentration de celle-ci variant de 400 à 900g/l.

Le procédé de l'invention peut comporter une étape préliminaire, préalablement au traitement par dialyse ou par résine qui vient d'être décrit. Cette étape préliminaire est particulièrement utile quand on part d'une suspension à concentration élevée en CeO₂ et qui peut donc présenter un taux d'impureté élevé et une tendance à décanter. Cette étape consiste à diminuer la force ionique de la suspension ou de la dispersion colloïdale de départ, c'est à dire à abaisser la teneur en impuretés ioniques de celle-ci. Ces impuretés peuvent être par exemple des ions nitrates et cériques.

Plusieurs méthodes peuvent être utilisées dans ce but.

On peut ainsi diminuer la force ionique par lavage/décantation. On laisse décanter la suspension de départ après un ajout d'eau déionisée et on soutire le surnageant obtenu. On ajoute de nouveau de l'eau à la partie restante qui est remise en suspension. Cette opération peut être répétée plusieurs fois de suite.Une autre méthode utilisable est la dialyse. Ce qui a été dit plus haut pour la technique de dialyse s'applique ici.

On peut aussi utiliser l'ultrafiltration. On alterne dans ce cas des séquences d'ultrafiltration et de dilution de la suspension ultrafiltrée par une solution acide, par exemple à pH 1 avec utilisation d'acide nitrique.

Enfin, la force ionique peut être diminuée par mise en oeuvre de résines échangeuses d'ions.

Dans tous les cas, les opérations décrites dans les méthodes exposées ci-dessus pour cette étape préliminaire peuvent être répétées jusqu'à l'obtention d'une conductivité donnée.

Une dernière étape du procédé de l'invention est une étape ultérieure de concentration de la dispersion obtenue après le traitement par dialyse ou par les résines.

Cette concentration pourra être effectuée par tout moyen convenable.

On peut citer tout d'abord l'ultrafiltration qui sera conduite dans les mêmes conditions que celles décrites plus haut.

On peut aussi faire évaporer la dispersion.

Une méthode intéressante est la compression osmotique, c'est à dire la méthode dont le principe consiste à équilibrer le potentiel chimique de l'eau à travers une membrane.

On procède en disposant la dispersion colloïdale dans un sac à dialyse par exemple en matière cellulosique, ce sac étant placé dans une solution aqueuse dont le potentiel chimique de l'eau est différent de celui de la phase aqueuse de la dispersion. Ceci peut se faire par exemple en utilisant une solution aqueuse de polyéthylène glycol (PEG) et de NaNO₃. La concentration en PEG fixe la pression osmotique et donc la concentration finale de la dispersion colloïdale de composé de cérium.

L'ensemble des étapes décrites plus haut du procédé est réalisé de préférence à température ambiante.

Les dispersions colloïdales de l'invention telles que décrites plus haut ou telles qu'obtenues par le procédé qui vient d'être détaillé peuvent être utilisées dans de nombreuses applications. On peut citer la catalyse pour post combustion automobile, la cosmétique, la lubrification, les céramiques. Elles peuvent être utilisées sur un substrat en tant qu'agent anticorrosion.

Ainsi, les dispersions colloïdales de l'invention s'appliquent tout particulièrement au traitement de substrats métalliques et notamment aux substrats en acier contenant du chrome et/ou de l'aluminium ou aux substrats en alliage contenant du chrome et/ou de l'aluminium.

On peut citer ici à titre d'exemple les aciers inoxydables du type martensitiques, ferriques, austénitiques, ces derniers pouvant être stabilisés au titane ou au niobium. On peut mentionner aussi les aciers ou les alliages réfractaires comme les alliages Fe-Cr-Al, Ni-Cr-Al-Y, Co-Cr-Al-Y ou encore Fe-Al ou Ni-Al.

L'état du substrat avant le traitement ne nécessite pas d'intervention particulière, si ce n'est les traitements classiques de dégraissage et de nettoyage. Les substrats peuvent être ou non pré-oxydés.

Le dépôt de la dispersion sur le substrat peut être réalisé directement à partir de la suspension de l'invention en utilisant des techniques classiques de revêtement du type trempage ou pulvérisation par exemple.

Après réalisation du dépôt, le substrat présente une couche adhérente en surface, ce qui le rend manipulable.

Le substrat doit être ensuite traité thermiquement afin d'éliminer l'eau notamment.

Le traitement thermique se fait généralement à une température d'au plus 600°C. Cette température peut être plus basse, par exemple d'au plus 400°C, en fonction de la nature des substrats.

Des exemples vont maintenant être donnés. Dans ces exemples, la conductivité est mesurée à l'aide d'un conductimètre de type CDM 83 (Radiometer Copenhaguen) et de sa cellule de mesure de type CDC 304.

### EXEMPLE 1

Un composé de cérium IV dispersable dans l'eau est synthétisé par thermohydrolyse de 6 litres de solution de nitrate cérique de concentration exprimée en CeO₂ de 80 g/l obtenue par dilution par de l'eau déionisée d'une solution mère (Ce⁴⁺ = 1,25 M et H⁺ = 0,5N). La thermohydrolyse est effectuée pendant 4 heures à 100°C.

Le précipité obtenu est filtré et repulpé dans l'eau avec addition de 180 cc d'eau déionisée .

Une première phase de purification de la dispersion, consistant en une élimination des ions nitrates et cériques, présents dans la dispersion est effectuée par décantation et soutirage du surnageant. Après homogénéisation de la dispersion précédemment obtenue par agitation, le pH est de 1,25 et la conductivité de 227 mS/cm. On laisse le précipité décanter pendant une nuit et on soutire le surnageant. On additionne de nouveau 300 cc d'eau déionisée, le pH de la dispersion après homogénéisation est de 0,85 et sa conductivité de 110 mS/cm. On laisse de nouveau le précipité décanter pendant une nuit et on soutire le surnageant. On additionne ensuite 180 cc d'eau déionisée . Après homogénéisation, le pH est de 0,85 et la conductivité de 70,5 mS/cm. On laisse à nouveau décanter une nuit et on soutire le surnageant. On amène le volume à 400 cc avec de l'eau déionisée . Après homogénéisation, la dispersion possède une parfaite stabilité vis à vis de la décantation (solution colloidale), elle présente un pH de 0,85 et une conductivité de 41,5 mS/cm.

Une deuxième phase de purification de la solution colloidale est réalisée avec utilisation de résines anionique ROH et cationique RH. A t = 0 heure, 45 g de résine cationique RH humide (référence Amberlite IRN 77) préalablement insérée dans une enveloppe cylindrique de diamètre environ 1 cm, en membrane cellulosique (référence Viking, diamètre de coupure 12000) fermée aux deux extrémités sont introduits dans la solution colloïdale. Au bout de trois heures (t = 3 h), 45 g de résine anionique ROH (référence Amberlite IRN 78) préalablement insérée dans une enveloppe comme décrite ci-dessus, sont introduits dans la solution colloïdale. A t = 5 h, on sort la résine cationique et la résine anionique. Le pH de la solution colloïdale est de 0,9 et la conductivité de 31 mS/cm.

La concentration de la solution colloïdale, déterminée par séchage à 60°C et calcination à 1000°C d'une aliquote, est égale à 466 g de CeO₂/1000 g de dispersion, ce qui est équivalent à une concentration de 778 g/l de CeO₂.

Dans une troisième phase, une concentration de la solution colloïdale est effectuée par compression osmotique comme suit.

On dilue par de l'eau déionisée la solution colloïdale précédente à 300 g de CeO₂/1000 g de dispersion. La solution colloïdale ainsi obtenue est versée dans la membrane cellulosique décrite précédemment et fermée à son extrémité inférieure. L'ensemble solution colloïdale/membrane cellulosique est immergé dans une première étape dans une solution de NaNO₃ 10⁻² M et de pH 1 pour équilibrage de la concentration en nitrate. Après cette étape d'équilibrage (temps d'équilibrage de 7 jours), l'ensemble est immergé dans une solution aqueuse de composition suivante : 3% en PEG (Polyéthylène Glycol PM = 35000 ), NaNO₃ = 10⁻² M et pH 1 ajusté par HNO₃. Au bout de 48 heures, la solution colloïdale est recueillie et la concentration en CeO₂ est déterminée égale à 608 g de CeO₂/1000 g de dispersion, ce qui est équivalent à 1277 g de CeO₂/litre de dispersion.

Le diamètre moyen des colloïdes de la dispersion est de 50 nm.

Le pH de la dispersion est de 1.

### EXEMPLE 2

A 500 grammes d'hydrate dispersable obtenu par thermohydrolyse d'une solutions de nitrate cérique, dans une solution d'ammoniaque (Ce02 = 60 g/l et rapport OH/Ce⁴⁺ = 2), on ajoute 400 cc d'eau déionisée.

Une première phase de purification de la dispersion est effectuée par décantation et soutirage du surnageant. Après homogénéisation de la dispersion précédemment obtenue par agitation, le pH est de 1,3 et la conductivité de 150 mS/cm. On laisse le précipité décanter une nuit et on soutire le surnageant. On additionne de nouveau 300 cc d'eau déionisée, le pH de la dispersion après agitation est de 0,9 et la conductivité de 81,7 mS/cm. On laisse de nouveau décanter une nuit et on soutire le surnageant. On additionne de l'eau déionisée jusqu'à un volume final de 420 cc. Après homogénéisation, la majeure partie du composé de cérium est sous forme colloïdale. Après élimination de la faible partie non dispersée, on recueille 415 cc de solution colloïdale présentant un pH égal à 1 et une conductivité de 42 mS/cm.

Une deuxième phase de purification de la solution colloïdale est réalisée avec utilisation de résines cationique RH et anionique ROH. A t = 0 h, 50 g de résine cationique RH humide (Amberlite IRN 77) préalablement insérée dans une enveloppe en membrane cellulosique comme à l'exemple 1, sont introduits dans la solution colloïdale. A t = 1 h, 50 g de résine anionique Amberlite IRN 78 préalablement insérée dans une enveloppe cellulosique sont introduits dans la solution colloïdale. A t = 5 h 30, on retire les résines anionique et cationique. Le pH de la solution colloïdale est de 1 et la conductivité de 30,8 mS/cm. La concentration en CeO₂ déterminée par séchage et calcination est égale à 373 g de CeO₂/1000 g de dispersion, ce qui est équivalent à 550 g/l de CeO₂.

Dans une troisième phase, une concentration de la solution colloïdale est effectuée par compression osmotique comme suit.

On dilue la solution colloïdale précédente à environ 200 g de CeO₂/1000 g de dispersion. La solution colloïdale ainsi obtenue est versée dans la membrane cellulosique décrite précédemment et fermée à son extrémité inférieure.

L'ensemble est équilibré dans une solution de NaN03 10⁻² M et à pH de 1 pendant 7 jours. On immerge ensuite cet ensemble membrane/solution colloidale dans une solution aqueuse de composition suivante : 14% PEG (PM = 35000), 10⁻² M NaNO₃, pH 1 et on recueille la solution colloïdale au bout de 24 heures. La concentration de la solution colloïdale est déterminée égale à 619 g de CeO₂/1000 g de dispersion, ce qui est équivalent à 1298 g de CeO₂/l.

Le diamètre moyen des colloïdes de la dispersion est de 5 nm.

Le pH de la dispersion est de 1.

## Revendications

1. Dispersion colloïdale en phase liquide aqueuse d'un composé de cérium à base d'oxyde ou d'hydroxyde de cérium, caractérisée en ce qu'elle présente une concentration en CeO₂ d'au moins 800g/l et une conductivité qui est d'au plus 35mS/cm.

2. Dispersion colloïdale selon la revendication 1, caractérisée en ce qu'elle présente une concentration en CeO₂ d'au moins 1000g/l.

3. Dispersion colloïdale selon la revendication 1 ou 2, caractérisée en ce que le composé de cérium est un composé de cérium IV.

4. Dispersion colloïdale selon l'une des revendications précédentes, caractérisée en ce qu'elle présente une conductivité comprise entre 5 et 35mS/cm.

5. Dispersion colloïdale selon l'une des revendications précédentes, caractérisée en ce qu'elle présente un pH compris entre 0,5 et 2 et plus particulièrement entre 0,95 et 2.

6. Dispersion colloïdale selon l'une des revendications précédentes, caractérisée en ce que le diamètre moyen de ses colloïdes varie entre 3 et 100nm.

7. Procédé de préparation d'une dispersion selon l'une des revendications précédentes, caractérisé en ce qu'on fait subir à une suspension ou dispersion de départ un traitement par dialyse ou un traitement par une résine cationique et une résine anionique, puis on concentre la dispersion ainsi obtenue.

8. Procédé selon la revendication 7, caractérisé en ce que préalablement au traitement précité, on diminue la force ionique de la dispersion ou de la suspension de départ.

9. Procédé selon la revendication 8, caractérisé en ce qu'on diminue la force ionique de la dispersion ou de la suspension de départ par lavage/décantation, par dialyse, par ultrafiltration ou par traitement avec une résine échangeuse d'ions.

10. Procédé selon l'une des revendications 7 à 9, caractérisé en ce qu'on soumet la dispersion ou la suspension précitée à un traitement par une résine cationique dans un premier temps puis on fait agir une résine anionique dans un deuxième temps.

11. Procédé selon l'une des revendications 7 à 10, caractérisé en ce qu'on effectue la concentration de la dispersion par évaporation, par compression osmotique ou par ultrafiltration.

12. Utilisation sur un substrat comme agent anticorrosion d'une dispersion selon l'une des revendications 1 à 6 ou d'une dispersion obtenue par le procédé selon l'une des revendications 7 à 11.

13. Utilisation en catalyse pour post combustion automobile, en cosmétique, en lubrification ou dans les céramiques d'une dispersion selon l'une des revendications 1 à 6 ou d'une dispersion obtenue par le procédé selon l'une des revendications 7 à 11.

## Claims

1. A colloidal dispersion, in a liquid aqueous phase, of a cerium compound based on cerium oxide or hydroxide, characterized in that the CeO₂ concentration thereof is at least 800 g/l, with a conductivity of at most 35 mS/cm.

2. A colloidal dispersion according to claim 1, characterized in that the CeO₂ concentration thereof is at least 1000 g/l.

3. A colloidal dispersion according to claim 1 or claim 2, characterized in that the cerium compound is a cerium IV compound.

4. A colloidal dispersion according to any one of the preceding claims, characterized in that the conductivity thereof is in the range 5 to 35 mS/cm.

5. A colloidal dispersion according to any one of the preceding claims, characterized in that the pH thereof is in the range 0.5 to 2, more particularly in the range 0.95 to 2.

6. A colloidal dispersion according to any one of the preceding claims, characterized in that the mean diameter of the colloids is in the range 3 to 100 nm.

7. A process for preparing a dispersion according to any one of the preceding claims, characterized in that a starting suspension or dispersion is treated by dialysis or by treatment with a cationic resin and an anionic resin, then the dispersion obtained is concentrated.

8. A process according to claim 7, characterized in that prior to the treatment cited therein, the ionic strength of the starting dispersion or suspension is reduced.

9. A process according to claim 8, characterized in that the ionic strength of the starting dispersion or suspension is reduced by washing/decanting, by dialysis, by ultrafiltration or by treatment with an ion exchange resin.

10. A process according to any one of claims 7 to 9, characterized in that said dispersion or suspension is treated first with a cationic resin and secondly with an anionic resin.

11. A process according to any one of claims 7 to 10, characterized in that the dispersion is concentrated by evaporation, by osmotic compression or by ultrafiltration.

12. Use of a dispersion according to any one of claims 1 to 6 or of a dispersion produced by the process of any one of claims 7 to 11, on a substrate as an anti-corrosion agent.

13. Use of a dispersion according to any one of claims 1 to 6 or of a dispersion produced by the process of any one of claims 7 to 11, for automobile post combustion catalysis, in cosmetics, in lubrication or in ceramics.

## Patentansprüche

1. Kolloidale Dispersion in flüssiger wäßriger Phase bestehend aus einer Cer-Verbindung auf der Grundlage eines Ceroxids oder -hydroxids, dadurch gekennzeichnet, daß sie eine CeO₂-Konzentration von mindestens 800 g/l und eine spezifische elektrische Leitfähigkeit von höchstens 35 mS/cm aufweist.

2. Kolloidale Dispersion nach Anspruch 1, dadurch gekennzeichnet, daß sie eine CeO₂-Konzentration von mindestens 1.000 g/l aufweist.

3. Kolloidale Dispersion nach Anspruch 1 oder 2, dadurch gekennzeichnet, daß die Cer-Verbindung eine Cer(IV)-Verbindung ist.

4. Kolloidale Dispersion nach einem der vorangehenden Ansprüche, dadurch gekennzeichnet, daß sie eine spezifische elektrische Leitfähigkeit zwischen 5 und 35 mS/cm aufweist.

5. Kolloidale Dispersion nach einem der vorangehenden Ansprüche, dadurch gekennzeichnet, daß sie einen pH-Wert zwischen 0,5 und 2, insbesondere zwischen 0,95 und 2, aufweist.

6. Kolloidale Dispersion nach einem der vorangehenden Ansprüche, dadurch gekennzeichnet, daß der mittlere Durchmesser ihrer Kolloide zwischen 3 und 100 nm liegt.

7. Verfahren zur Herstellung einer Dispersion nach einem der vorangehenden Ansprüche, dadurch gekennzeichnet, daß die Ausgangssuspension oder -dispersion einer Dialyse unterzogen oder mit einem Kationen- oder Anionenaustauscherharz behandelt wird und anschließend die so erhaltene Dispersion konzentriert wird.

8. Verfahren nach Anspruch 7, dadurch gekennzeichnet, daß vor der genannten Behandlung die Ionenstärke der Ausgangsdispersion oder -suspension verringert wird.

9. Verfahren nach Anspruch 8, dadurch gekennzeichnet, daß die Ionenstärke der Ausgangsdispersion oder -suspension durch Waschen/Dekantieren, Dialyse, Ultrafiltration oder die Behandlung mit einem Ionenaustauscherharz verringert wird.

10. Verfahren nach einem der Ansprüche 7 bis 9, dadurch gekennzeichnet, daß die genannte Dispersion oder Suspension in einem ersten Verfahrensschritt mit einem Kationenaustauscherharz und in einem zweiten Verfahrensschritt mit einem Anionenaustauscherharz behandelt wird.

11. Verfahren nach einem der Ansprüche 7 bis 10, dadurch gekennzeichnet, daß die Konzentration der Dispersion durch Verdunstung, osmotischen Druck oder Ultrafiltration erreicht wird.

12. Verwendung einer Dispersion nach einem der Ansprüche 1 bis 6 oder einer Dispersion hergestellt durch ein Verfahren nach einem der Ansprüche 7 bis 11 auf einem Substrat als Korrosionsschutzmittel.

13. Verwendung einer Dispersion nach einem der Ansprüche 1 bis 6 oder einer Dispersion hergestellt durch ein Verfahren nach einem der Ansprüche 7 bis 11 bei der Katalyse Zur Nachverbrennung in Fahrzeugen, in einer kosmetischen Zusammensetzung, bei der Schmierung oder in Keramiken.
